# EUROPEAN PATENT APPLICATION

(11) **EP 1 547 815 A2**
(43) Date of publication of application: **29.06.2005**
(21) Application number: 04030348.9
(22) Date of filing: 21.12.2004
(51) Int. Cl.: B60B 27/02

(54) **Bicycle hub**

(30) Priority: 25.12.2003 JP 2003430236
(71) Applicant: Shimano Inc., Osaka 590-8577 (JP)
(72) Inventor: Kanehisa, Takanori, Sakai Osaka (JP); Sugimoto, Tomonori, Sakai Osaka (JP)
(74) Representative: Grosse, Wolfgang, Dipl.-Ing.

(57) **Abstract**

A rear hub 1 has a hub shaft 5, a hub body 6, a pair of hub bearings 10, 11, a drive body 7, a one-way clutch 8, a pair of freewheel bearings 12, 13, a spacer 14 and a pressing member 15. The hub bearings 10, 11 are arranged between the hub body 6 and the hub shaft 5 to rotatably support the hub body 6 on the hub shaft 5. The drive body 7 is rotatably supported on the hub shaft 5 by the freewheel bearings 12, 13. The one-way clutch 8 transfers rotation from the drive body 7 to the hub body 6 in only one direction. The freewheel bearings 12, 13 have outer rings 13a that are loosely fitted to the drive body 7, and inner rings 13b that are tightly fitted on the hub shaft 5. The pressing member 15 is screwed onto the hub shaft 5 and presses against the inner ring 13b of the outer freewheel bearing 13.

## Description

### CROSS-REFERENCE TO RELATED APPLICATIONS

This application claims priority to Japanese Patent Application No. 2003-430236. The entire disclosure of Japanese Patent Application No. 2003-430236 is hereby incorporated herein by reference.

### BACKGROUND OF THE INVENTION

### Field of the Invention

The present invention relates generally to a bicycle hub and more specifically to a bicycle rear hub that is arranged in the center portion of a wheel, mounted to the frame of the bicycle, and configured such that a sprocket can be mounted thereto.

### Background Information

A bicycle wheel typically includes a centrally located hub, a plurality of spoke extending outwardly from the hub and a rim coupled to the outer ends of the spokes. The hub typically includes a spindle or hub shaft mounted in a detachable and non-rotatable manner to the frame of the bicycle, a hub body mounted in a freely rotatable manner to the hub shaft, and a pair of bearings configured to support the hub body in such a manner that it can rotate freely with respect to the hub shaft. In the case of a rear hub (free hub) mounted to the rear wheel of a bicycle, the hub is further provided with a drive body mounted in a freely rotatable manner to the hub shaft and a one-way clutch configured and arranged to transfer rotation from the drive body to the hub body in only one direction (the direction corresponding to forward travel of the bicycle). One known example of this type of rear bicycle hub is disclosed in United States Patent No. 6,260,681, which shows a bicycle hub having a pair of rolling bearings installed between the drive body and the hub shaft and arranged so as to be spaced apart from each other. The inner ring of the rolling bearing located farther toward the outside in the axial direction of the hub shaft is pressed by a pressing member that is screwed onto the hub shaft. The rolling bearing located farther toward the inside in the axial direction of the hub shaft is arranged so as to touch against the hub shaft and the drive body. A cylindrical spacer is installed between the inner rings of the two rolling bearings. Thus, the drive body is pressed by the pressing member through the bearings and thereby positioned with respect to the hub body.

In the conventional bicycle hub the above described United States Patent, the outer rings of the rolling bearings are fitted tightly to the inner circumference of the drive body and the inner rings of the rolling bearings are fitted tightly to the outside circumferential surface of the hub shaft. When these kinds of bearings are installed between the drive body and the hub shaft, the innermost one of the bearings is first press fitted into the drive body and then the hub shaft is press fitted into the innermost one of the bearings. Next, the spacer is inserted and the outermost one of bearings is press fitted into position. Finally, the pressing member is installed so as to press against the inner ring of the outermost bearing and position the drive body with respect to the hub body.

In view of the above, it will be apparent to those skilled in the art from this disclosure that there exists a need for an improved rear bicycle hub. This invention addresses this need in the art as well as other needs, which will become apparent to those skilled in the art from this disclosure.

### SUMMARY OF THE INVENTION

With the conventional bicycle hub described above, the inner ring and outer ring of the outer rolling bearing tend to become displaced relative to each other when the inner ring thereof is pressed with the pressing member. Depending on the amount of the displacement, there is the possibility that variation will occur in the torque of the drive body when the drive body is rotated relative to the hub shaft. If the torque of the drive body varies, the drive body will not rotate smoothly relatively to the hub shaft and the hub will not feel well made when one holds it in one's hand and rotates the hub shaft or the drive body. Thus, it is difficult provide such a hub with a high quality feel.

The object of the present invention is to reduce the variation of the torque of the drive body.

In view of the above mentioned problems and object, a bicycle hub is provided in accordance with a first aspect of the present invention that is configured with a hub shaft, a tubular hub body, a first rolling bearing, a second rolling bearing, a tubular drive body, a one-way clutch, a third rolling bearing, a fourth rolling bearing, a tubular spacer, and a pressing member. The hub shaft is configured to be mounted to a bicycle frame and form a center axis of rotation of the bicycle hub. The tubular hub body is arranged on the hub shaft to rotate about the center axis of the hub shaft. The first rolling bearing is arranged between the hub body and the hub shaft at a first end of the hub body. The second rolling bearing is arranged between the hub body and the hub shaft at a second end of the hub body and spaced apart from the first rolling bearing in an axial direction of the hub shaft. The tubular drive body is arranged on the hub shaft in a rotatable manner and configured such that at least one sprocket can be mounted to an outside circumference thereof. The one-way clutch is configured and arranged to transfer rotation from the drive body to the hub body in only one direction. The third rolling bearing is arranged in a gap between the drive body and the hub shaft. The third rolling bearing has an outer ring abutting and an inner ring. The outer ring of the third rolling bearing abuts against the drive body and fits loosely inside the drive body to have a clearance with respect to an inside circumference of the drive body. The inner ring of the third rolling bearing abuts against the hub shaft and fits tightly onto the hub shaft. The fourth rolling bearing is arranged to an outwardly of the third rolling bearing in the axial direction of the hub shaft. The fourth rolling bearing has an outer ring fitting and an inner ring. The outer ring of the fourth rolling bearing abuts the hub shaft and fits loosely inside the drive body to have a clearance with respect to the inside circumference of the drive body. The inner ring of the fourth rolling bearing abuts the hub shaft and fitting tightly onto the hub shaft. The tubular spacer is arranged on the hub shaft in such a manner as to be pinched between the inner rings of the third and fourth rolling bearings. The pressing member is configured to be fastened onto the hub shaft to press against the inner ring of the fourth rolling bearing and position the drive body relative to the hub body.

With this bicycle hub, when the pedals are rotated in the direction corresponding to forward travel of the bicycle and the rotation of the pedals is transmitted to the sprocket, the drive body rotates in the same direction. The rotation of the drive body is transferred to the hub body by means of the one-way clutch and the wheel rotates. When this hub is assembled, first the hub body is mounted to the hub shaft using the first and second bearings and then the component parts of the one-way clutch are mounted to the hub body and drive body. Next, the third bearing is installed into the drive body. Since the outer ring of the third bearing fits loosely in the drive body with a certain degree of clearance there-between, it can be installed smoothly into the drive body. Next, the inner ring of the third bearing is press fitted onto the hub shaft so that the drive body is mounted to the hub shaft. Then, the spacer is mounted to the hub shaft in such a manner as to abut against the third bearing and the fourth bearing is installed onto the hub shaft using the pressing member such that the inner ring of the fourth bearing is press fitted onto the hub shaft and the drive body is positioned with respect to the hub body. Hear again, the fourth bearing can be inserted smoothly into the drive body because the outer ring of the fourth bearing fits loosely in the drive body with a certain degree of clearance. As a result, the outer ring and the inner ring do not readily become displaced from each other in the axial direction of the hub shaft during press fitting. Since the outer rings of the third and fourth bearings are fitted loosely into the drive body, the outer rings move smoothly together with the inner rings when the third and fourth bearings are press fitted onto the hub shaft and it is difficult for the outer rings to become axially displaced relative to the inner rings. Consequently, variation does not readily occur in the torque of the drive body.

According to a second aspect of the present invention, the bicycle hub of the first aspect of the present invention is further provided with a seal member disposed between the outer ring of the fourth rolling bearing and the drive body. Since the fourth bearing is located toward the outside of the hub, there is the potential for liquids and other contaminants to penetrate the inside of the hub through the gap (loose fit) between the outer ring of the fourth bearing and the inner circumference of the drive body. The seal member seals the gap between the outer ring and the inner circumference of the drive body to make it difficult for contaminants to enter the hub.

According to a third aspect of the present invention, the bicycle hub of the first or second aspect of the present invention is configured with the internal surface of the drive body having an annular groove for installing the seal member is provided in the internal surface of the drive body. Since the seal member is installed into a groove provided in the drive body, it is not necessary to make a groove in the rolling bearing and a commercially available rolling bearing can be used.

According to a fourth aspect of the present invention, the bicycle hub of anyone of the first to third aspects of the present invention is configured such that the first and second rolling bearings are angular ball bearings and the third and fourth rolling bearings are ball bearings. Angular ball bearings having a high thrust load strength are used for the hub body because thrust forces tend to act on the hub body. Meanwhile, ball bearings are used for the drive body because the thrust forces that act on the drive body are weaker than those acting on the hub body.

According to a fifth aspect of the present invention, the bicycle hub of anyone of the first to fourth aspects of the present invention is configured such that the drive body includes a first or inner cylindrical body configured to have at least one sprocket mounted to the outside circumference thereof, and a second or outer cylindrical body configured to mate in a non-rotatable manner with an inner circumferential part of the first cylindrical body, be arranged generally inside the hub body, and have the one-way clutch mounted thereto. Since the drive member is made up of two cylindrical bodies and the second cylindrical body fits inside the first cylindrical body, the water resistance performance of the hub can be improved and the work required to assemble the hub is simplified.

According to a sixth aspect of the present invention, the bicycle hub of anyone of the first to fifth aspects of the present invention is configured such that the one-way clutch includes at least one clutch pawl, a force applying member and a plurality of ratchet teeth. The at least one clutch pawl is movably mounted to the drive body between an extended position and a retracted position. The force applying member is configured and arranged to apply a force against the at least one clutch pawl to urge the at least one clutch pawl toward the extended position. The ratchet teeth are provided on the hub body, are configured to selectively mate with the at least one clutch pawl when the drive body rotates in one direction such that the rotation of the drive body is transferred from the at least one clutch pawl to the ratchet teeth on the drive body, and are configured to retract the at least one clutch pawl to the retracted position when the drive body rotates in the other direction. Thus, the drive body is able to transfer rotation to the hub body in only one direction by means of the engagement and disengagement of the clutch pawls and ratchet teeth.

According to a seventh aspect of the present invention, the bicycle hub of the sixth aspect of the present invention is configured such that the ratchet teeth are formed on the internal surface of a cylindrical member that is fixed to the internal surface of the hub body. The ratchet teeth require a higher strength than the hub body as a whole and this arrangement allows the ratchet teeth to be provided on a member that is separate from the hub body. As a result, the weight of the hub can be reduced while maintaining the strength of the one-way clutch.

With the present invention, the outer rings of the third and fourth bearings move smoothly together with the inner rings when the third and fourth bearings are press fitted onto the hub shaft because the outer rings of the third and fourth bearings are fitted loosely into the drive body. As a result, the outer and inner rings do not easily become displaced with respect to each other in the axial direction of the hub shaft and variation is less likely to occur in the torque of the drive body.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of a bicycle equipped a rear hub in accordance with a first embodiment of the present invention;
Figure 2 is a partial cross sectional view of the rear hub in accordance with the first embodiment of the present invention;
Figure 3 is an enlarged cross sectional view of the drive body mounting section of the rear hub shown in Figure 2; and
Figure 4 is an enlarged cross sectional view, corresponding to Figure 3, of the drive body mounting section of a rear hub in accordance with a second embodiment of the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

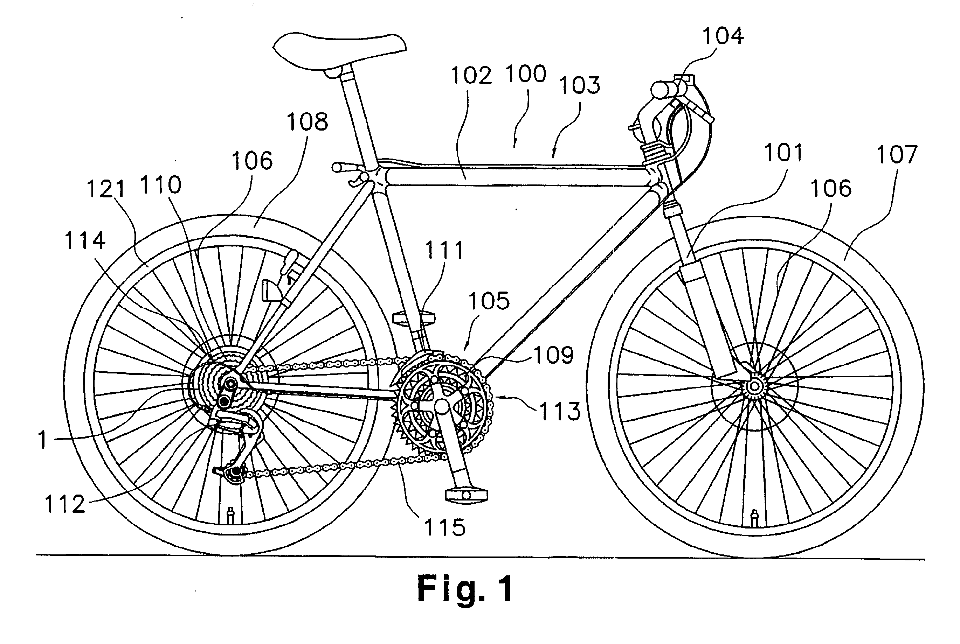

Referring initially to Figure 1, a bicycle 100 is illustrated that is equipped with a rear hub 1 in accordance with a first embodiment of the present invention. The bicycle 100 is an off-road bicycle, i.e., an all terrain bicycle (ATB) or a mountain bike (MTB). The bicycle 100 includes a front fork 101 and a frame body 102 that form a frame 103. In the preferred embodiment, the front fork 101 is equipped with suspension and the frame body 102 is configured to support the front fork 101 in a freely rotatable manner at a front portion thereof. The bicycle 100 further includes a handlebar unit 104 fastened to the front fork 101, a drive unit 105, a front wheel 107 having spokes 106 mounted to the front fork 101 and a rear wheel 108 having spokes 106 and mounted to a rear portion of the frame body 102.

The drive unit 105 includes a front sprocket cluster 109 and a rear sprocket cluster 110, a front derailleur 111, and a rear derailleur 112 that form front and rear gear changing devices 113 and 114. The drive unit 105 includes a chain 115 that is operatively disposed on the front and rear sprocket clusters 109 and 110. The drive unit 105 has front crank arms with pedals that the rider pushes to operate the drive unit 105 in a conventional manner.

The rear hub 1 in accordance with the embodiment of the present invention will now be described. In the following explanations, the terms "left" and "right" will be used from the perspective of viewing the bicycle from the rear. Moreover, as used herein, the following directional terms "forward, rearward, above, downward, vertical, horizontal, below and transverse" as well as any other similar directional terms refer to those directions of a bicycle equipped with the rear hub 1 of the present invention. Accordingly, these terms, as utilized to describe the rear hub 1 of the present invention should be interpreted relative to a bicycle equipped with the rear hub 1 of the present invention.

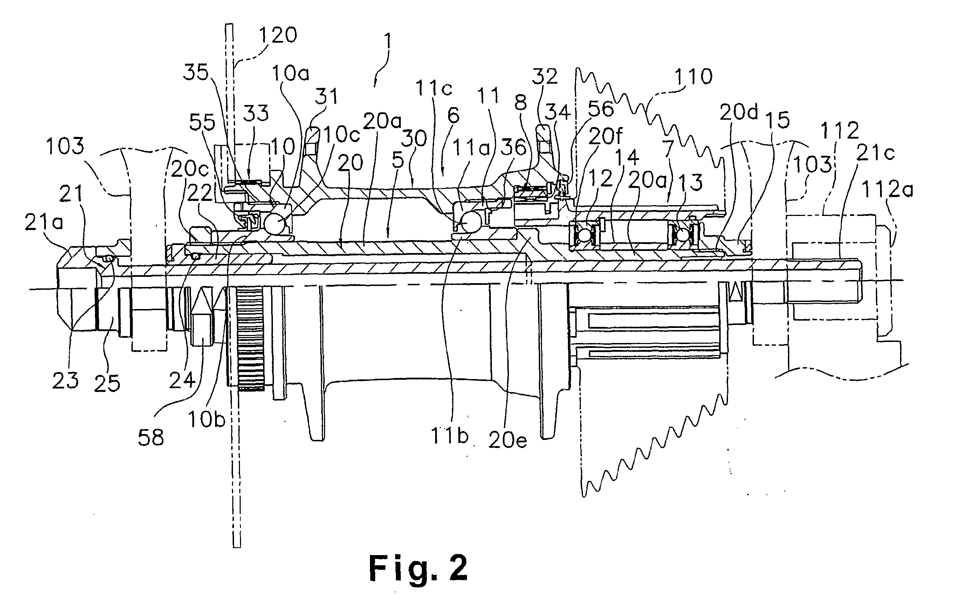

As shown in Figure 2, the two ends of the rear hub 1 are fastened to a rear part of the frame 103 along with the rear derailleur 112. The rear hub 1 basically includes a hub shaft or spindle 5, a generally cylindrical or tubular hub body 6 and a drive body 7. The hub shaft 5 is fastened to a rear part of the frame 103, while the hub body 6 is arranged over the outside circumference of the hub shaft 5 with clearance there-between so as to rotate around the hub shaft 5. The drive body 7 is arranged on the right side of the hub body 6 in such a manner as to be coaxial with the hub body 6 and to partially overlap with the inside of the hub body 6. The rear hub 1 further includes a one-way clutch 8, a pair of hub rolling bearings 10 and 11, a pair of freewheel rolling bearings 12 and 13, a generally cylindrical or tubular spacer 14 and a pressing member 15. The one-way clutch 8 is configured and arranged to transfer rotation from the drive body 7 to the hub body 6 only in the direction corresponding to forward travel of the bicycle 100. The hub rolling bearings 10 and 11 are arranged between the hub body 6 and the hub shaft 5 so as to form first and second rolling bearings that supports the hub body 6 on the hub shaft 5 in a rotatable manner. The freewheel rolling bearings 12 and 13 (a left and right pair) are arranged in the gap between the drive body 7 and the hub shaft 5 and spaced apart from each other in the axial direction of the hub shaft 5. The freewheel rolling bearings 12 and 13 form third and fourth rolling bearings that supports the drive body 7 on the hub shaft 5 in a rotatable manner. The spacer 14 is a tubular member arranged in such a manner as to be pinched between the inner rings of the freewheel rolling bearings 12 and 13. The pressing member 15 that is screwed onto the hub shaft 5 so as to press against the fourth freewheel rolling bearing 13 and position the drive body 7 relative to the hub body 6.

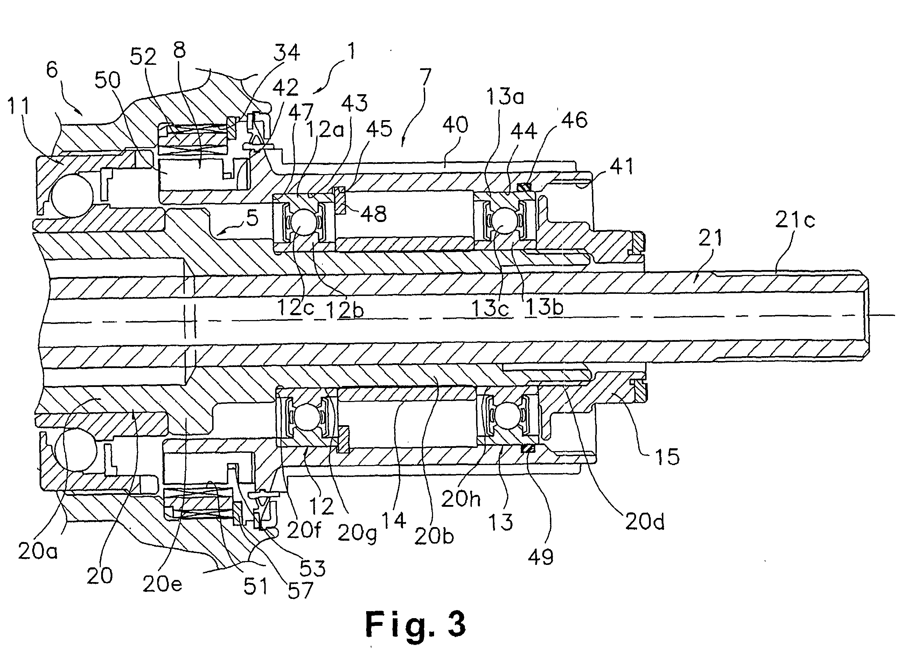

The hub shaft 5 basically includes a generally cylindrical or tubular main shaft body 20, a generally cylindrical or tubular threaded shaft 21 and a flange member 22. The main shaft body 20 supports the four rolling bearings 10 to 13. The threaded shaft 21 passes through the main shaft body 20. The flange member 22 is inserted into the left end of the main shaft body 20. The main shaft body 20 includes a large-diameter cylindrical section 20a, a small-diameter cylindrical section 20b, a pair of (first and second) externally threaded sections 20c and 20d, a flange section 20e, and a step section 20f. The large-diameter cylindrical section 20a is positioned on the inside of the hub body 6. The small-diameter cylindrical section 20b is positioned inside the drive body 7. The first and second externally threaded sections 20c and 20d are formed on the outside surface of both ends of the shaft main body 20. The flange section 20e has a larger diameter than the large-diameter cylindrical section 20a, and is formed between the large-diameter cylindrical section 20a and the small-diameter cylindrical section 20b. The step section 20f is formed on the small-diameter cylindrical section 20b. Additionally, as shown in Figure 3, the small-diameter cylindrical section 20b is provided with bearing mounting surfaces 20g and 20h having larger diameters than the other portions of the small-diameter cylindrical section 20b.

The threaded shaft 21 has a large-diameter head section 21a formed on the left end thereof, a shaft section 21b that passes through the main shaft body 20, and a third externally threaded section 21c formed on the right end of the shaft section 21b. A contact member 25 is mounted in a freely rotatable manner to the head section 21a and serves to pinch the frame 103 between itself and the flange member 22. An O-ring serving to prevent the contact member 25 from falling off is installed between the head section 21 a and the contact member 25. The flange member 22 is inserted into the left end of main shaft body 20 and is prevented from falling out by an O-ring 24 installed in the gap between the flange member 22 and the internal surface of the main shaft body 20. A flanged nut 112a provided on the derailleur 112 is screwed onto the third threaded section 21 c of the threaded shaft 21 so as to pinch the rear derailleur 112 and the forked rear portion of the frame 103 between itself and the head section 21a, thereby fastening the hub shaft 5 to the frame 103 in a non-rotatable manner.

The hub body 6 is made of, for example, a lightweight aluminum alloy and its external circumferential surface is provided with first and second hub flanges 31 and 32 (left and right pair) that are spaced apart from each other. A brake mounting section 33 configured such that the rotor 120 of a disk brake can be mounted thereto is provided on the internal and external surfaces of the left end of the hub body 6. A one-way clutch mounting section 34 configured such that the one-way clutch 8 can be mounted thereto is provided on the internal surface of the right end of the hub body 6. Bearing mounting sections 35 and 36 for mounting the bearings 10 and 11 are provided on the internal surface of the hub body 6 at positions axially inward of the brake mounting section 33 and axially inward of the one-way clutch mounting section 34. The hub body 6 is supported by the first and second bearings 10 and 11 in such a manner that it can rotate freely with respect to the hub shaft 5. The spokes 106 (Figure 1) hook onto the first and second hub flanges 31 and 32 and serve to link the wheel rim 121 (Figure 1) to the hub body 6.

The first and second bearings 10 and 11 are angular ball bearings in which the balls are supported by, for example, opposing slanted surfaces and seals are provided on the axially outward facing sides thereof. The first bearing 10 has an outer ring or cone 10a that is screwed into the bearing mounting section 35, an inner ring or cone 10b mounted to the external surface of the main shaft body 20 of the hub shaft 5, and a plurality of balls 10c arranged between and in contact with the outer and inner rings 10a and 10b. The second bearing 11 has an outer ring or cone 11a that is screwed into the bearing mounting section 36, an inner ring or cone 11b mounted to the external surface of the main shaft body 20 of the hub shaft 5, and a plurality of balls 11c arranged between and in contact with the outer and inner rings 11a and 11b. The inner ring 10b is screwed onto the first threaded section 20c provided on the external surface of the main shaft body 20, while the inner ring 11b is press fitted onto the external surface of the main shaft body 20 in such a manner as to abut against the flange section 20e. The inner ring 10b is positioned and locked (prevented from turning) by a lock nut 58 that is screwed onto the first threaded section 20c.

The drive body 7 is a generally cylindrical body made of, for example, steel and is configured such that a sprocket cluster 110 having a plurality of sprockets can be mounted thereto in a non-rotatable manner. As shown in Figure 3, the external surface of the drive body 7 is provided with a sprocket mounting section 40 on which the sprocket cluster 110 is mounted in a non-rotational manner. The sprocket mounting section 40 comprises, for example, splines. A nut installing section 41 comprising internal threads is provided on the internal surface of the right-hand end of the drive body 7 so that a fastening nut (not shown) can be installed for the purpose of fastening the sprocket cluster 110. A circular arc shaped clutch pawl support section 42 is provided on the external surface of the left-hand end of the drive body 7 and serves to support the clutch pawls 50 (discussed later) of the one-way clutch 8 in such a manner that the clutch pawls 50 can stand up (extended position) and lie down (retracted position) freely. Bearing mounting surfaces 43 and 44 are provided on the internal surface of the drive body 7 and have slightly smaller inside diameters than the rest of the internal surface of the drive body 7. The outer rings 12a and 13a of the third and fourth rolling bearings 12 and 13 are installed into these bearing mounting surfaces 43 and 44. A first annular groove 45 is formed closely adjacent to the bearing mounting surface 43 and a second annular groove 46 is formed closely adjacent to the bearing mounting surface 44. A step section 47 is formed to the left of the bearing mounting surface 43.

In this example, the third and fourth rolling bearings 12 and 13 are sealed ball bearings that are sealed on both sides with the bearing surfaces being formed by races having primarily circumferentially supporting bearing surfaces (called herein "circumferential ball bearings"). The third rolling bearing 12 has an outer ring or race 12a installed into the respective bearing mounting surface 43 of the drive body 7, an inner ring or race 12b mounted onto the respective bearing mounting surface 20g of the hub shaft 5, and a plurality of balls 12c arranged between and in contact with the outer and inner rings 12a and 12b. The fourth rolling bearing 13 has an outer ring or race 13a installed into the respective bearing mounting surface 44 of the drive body 7, an inner ring or race 13b mounted onto the respective bearing mounting surface 20h of the hub shaft 5, and plurality of balls 13c arranged between and in contact with the outer and inner rings 13a and 13b. The outer rings 12a and 13a and the bearing mounting surfaces 43 44 are loosely fitted together such that they having a degree of clearance between the outer ring and the bearing mounting surface, while the inner rings 12b and 13b and the bearing mounting surfaces 20g and 20h are tightly fitted together. Consequently, the outer rings 12a and 13a can be installed smoothly into the bearing mounting surfaces 43 and 44 of the drive body 7. Meanwhile, the inner rings 12b and 13b can be press fitted onto the hub shaft 5 in such a manner that they are held securely in place.

A flexible retaining ring 48 is installed into the first annular groove 45 and the outer ring 12a is positioned by being sandwiched between the step section 47 and the retaining ring 48 such that it cannot move in the axial direction. The inner ring 12b is positioned by being abutted against the step section 20f of the hub shaft 5. A seal member 49, e.g., an O-ring, is installed into the second annular grove 46. The seal member 49 serves to seal the gap between the outer ring 13a and the mounting surface of the drive body 7 (which are loosely fitted) and prevent liquids and other contaminants from entering the hub.

The spacer 14 is installed such that the ends thereof touch against the inner ring 12b and the inner ring 13b and serves to position the first and fourth rolling bearings 12 and 13 such that a prescribed spacing is maintained there-between.

The pressing member 15 is screwed onto the second externally threaded section 20d of the hub 5. The pressing member 15 serves to press the inner ring 13b and position the drive body 7 with respect to the hub body 6. When the pressing member 15 is screw-tightened, the inner ring 13b, the spacer 14, and the inner ring 12b are pressed against the step section 20f of the hub shaft 5 and the drive body 7 is thereby installed onto the hub shaft 5 in such a manner as to have a prescribed position with respect to the hub body 6. Meanwhile, the rear hub 1 is fastened to the frame 103 by means of the frame 103 being pinched between the pressing member 15 and the rear derailleur 112.

The one-way clutch 8 has a plurality of equally spaced apart clutch pawls 50, a plurality of saw-tooth-shaped ratchet teeth 51 forming a ratchet part 52, and a ring-shaped spring member 53. The clutch pawls 50 are moveably mounted on the clutch pawl support section 42 of the drive body 7 in such a manner that they can stand up (extended position) and lie down freely (retracted position). The ratchet part 52 is serration-fitted into the one-way clutch mounting section 34 of the hub body 6 in a non-rotatable manner with the saw-tooth-shaped ratchet teeth 51 on the internal surface thereof. The ring-shaped spring member 53 applies a force against the clutch pawls 50 in such a manner as to urge the clutch pawls 50 toward a standing posture (extended position). The ratchet part 52 is prevented from coming out of place by the retaining ring 57. When the drive body 7 rotates in the direction corresponding to forward motion of the bicycle, the clutch pawls 50 of the one-way clutch 8 engage with the ratchet teeth 51 and the rotation is transferred to the hub body 6. Conversely, when the hub body 6 rotates in the direction corresponding to forward motion of the bicycle, such as during downhill travel, or when the drive body 7 is rotated in the direction opposite the direction corresponding to forward motion of the bicycle, the clutch pawls 50 are pressed by the ratchet teeth 51 in opposition to the spring force of the spring member 53 such that they lie down and rotation is not transferred between the hub body 6 and the drive body 7.

The gap between the outer ring 10a and inner ring 10b of the first rolling bearing 10 and the gap between the right-hand end of the hub body 6 and the drive body 7 are sealed with dust seals 55 and 56, respectively.

When a rear hub 1 constituted as described heretofore is assembled, first the hub body 6 is mounted to the hub shaft 5. This is accomplished by first screwing the outer rings 10a and 11a of the first and second rolling bearings 10 and 11 (it is assumed the bearings are already assembled) into the internal surface of the hub body 6 such that the outer rings 10a and 11a are securely fastened therein and also screwing the ratchet part 52 of the one-way clutch 8 into the internal surface of the hub body 6 such that it is securely fastened therein. The main shaft body 20 of the hub shaft 5 is then inserted into the hub body 6 from the right side (i.e., the right side from the perspective of Figure 2) and the inner ring 10b of the first bearing 10 is screwed onto the first externally threaded section 20c. In this way, the compression of the balls of the first and second rolling bearings 10 and 11 is adjusted while mounting the hub body 6 to the hub shaft 5 in a freely rotatable manner.

Next, the drive body 7 is mounted onto the hub shaft 5. Before this is done, the clutch pawls 50 are mounted to the clutch pawl support section 42 of the drive body 7 and the spring member 53 is mounted to the clutch pawls 50. Then the third rolling bearing 12 is installed into the bearing mounting surface 43 of the drive body 7 and the retaining ring 48 is installed into the first annular groove 45, the outer ring 12a being positioned by the retaining ring 48. The third rolling bearing 12 is then oriented toward and press fitted onto the bearing mounting surface 20g of the hub shaft 5, thereby mounting the drive body 7 onto the hub shaft 5. From this state, the spacer 14 is installed over the hub shaft 5, the seal member 49 is installed into the second annular groove 46, and then the fourth rolling bearing 13 is installed onto the bearing mounting surface 20h. The fourth rolling bearing 13 is installed by screwing the pressing member 15 onto the second externally threaded section 20d such that it presses against the inner ring 13b of the fourth rolling bearing 13 and causes the inner ring 13b to be press fitted onto the bearing mounting surface 20h. During the press fitting, the outer ring 13a moves smoothly in the axially inward direction (leftward in Figure 3) in accordance with the movement of the inner ring 13b because the outer ring 13a is loosely fitted into the bearing mounting surface 44 of the drive body 7. As a result, the inner ring 13b and the outer ring 13a do not easily become displaced relative to each other in the axial direction and variation does not readily occur in the torque of the drive body 7. Finally, after fully tightening the pressing member 15, the assembly of the rear hub 1 is completed by installing the dust seals 55 and 56.

### SECOND EMBODIMENT

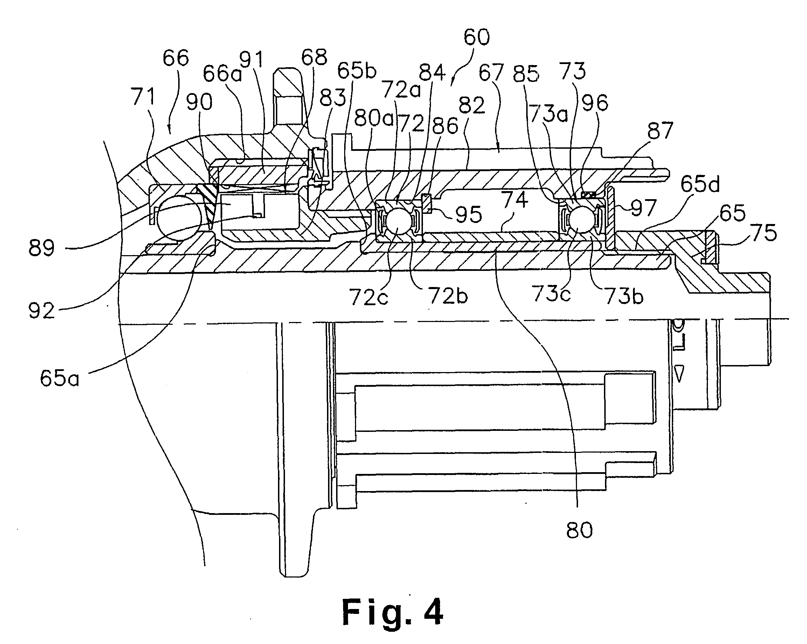

Referring now to Figure 4, a rear hub 60 in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity. Although the previous embodiment presents a case in which the rear hub 1 is mounted to the frame 103 using a threaded shaft, the present invention is not limited to such an arrangement. Figure 4 shows the rear hub 60 that is configured to be mounted to the frame 103 of the bicycle 100 in a freely detachable manner using a well-known quick release configuration (not shown). This rear hub 60 is intended for use with road bikes (or "road racers") and is lighter in weight than the rear hub 1 of the previously described embodiment.

The rear hub 60 comprises a hub shaft 65, a hub body 66, and a drive body 67. The rear hub 60 is further provided with a one-way clutch 68, a first rolling bearing (not shown), a second rolling bearing 71, third and fourth rolling bearings 72 and 73, a generally cylindrical or tubular spacer 74, and a pressing member 75. The one-way clutch 68 is configured and arranged to transfer rotation from the drive body 67 to the hub body 66 only in the direction corresponding to forward travel of the bicycle. The first rolling bearing (not shown) and the second rolling bearing 71 are arranged between the hub body 66 and the hub shaft 65. The third and fourth rolling bearings 72 and 73 are arranged in the gap between the drive body 67 and the hub shaft 65 and spaced apart from each other. The tubular spacer 74 is arranged in such a manner as to be pinched between the inner rings 72b and 73b of the third and fourth rolling bearings 72 and 73. The pressing member 75 screws onto the hub shaft 65, and presses against the fourth rolling bearing 73 to position the drive body 67 with respect to the hub body 66.

The hub shaft 65 is a generally cylindrical member having a well-known quick release shaft passing through the inside thereof. The hub shaft 65 is provided with two step sections 65a and 65b located on both sides of the section where the one-way clutch 68 is mounted. A first externally threaded section (not shown) and a second externally threaded section 65d are formed on both ends of the hub shaft 65. A cylindrical bearing seat 80 is mounted to the hub shaft 65 at a position axially inward of the second externally threaded section 65d. The bearing seat 80 is loosely fitted onto the external surface of the hub shaft 65 with a degree of clearance and is positioned along the hub shaft 65 by the step section 65b. A step section 80a is provided on the left end of the bearing seat 80 for the purpose of positioning the third bearing 72. The bearing seat 80 is provided on the hub shaft 65 so that the drive body 67 and the bearing seat 80 can be changed (replaced) together with ease.

The hub body 66 is supported in a freely rotatable manner on the hub shaft 65 by means of the first bearing and second bearing 71 mounted inside the hub body 66. A one-way clutch mounting section 66a is provided on the internal surface of the right-hand end of the hub body 66 and the ratchet part 91 of the one-way clutch 68 is installed in a non-rotatable but freely removable manner in the clutch mounting section 66a. The internal face of the ratchet part 91 is provided with ratchet teeth 90.

In this embodiment, the drive body 67 comprises a first cylindrical body 82 that is made of, for example, an aluminum alloy and has a sprocket cluster mounted to the outside circumference thereof and a second cylindrical body 83 that is made of, for example, a steel material, has the one-way clutch 68 mounted thereon, is arranged generally inside the hub body 66, and mates in a non-rotatable manner with an inner circumferential part of the first cylindrical body 82. The second cylindrical body 83 is fastened to the first cylindrical body 82 by being screwed into the first cylindrical body 82. The clutch pawls 89 of the one-way clutch 68 are mounted to the external circumferential surface of the second cylindrical body 83 in such a manner that they can stand up and lie down freely. The clutch pawls 89 are spring-loaded in a standing posture by a spring member 92.

Two bearing mounting surfaces 84 and 85 are provided on the internal surface of the first cylindrical body 82 and have smaller inside diameters than the rest of the internal surface of the first cylindrical body 82. Also provided in the internal surface of the first cylindrical body 82 are a first annular groove 86 formed adjacent to the bearing mounting surface 84 and a second annular groove 87 formed in the bearing mounting surface 85. A retaining ring 95 is installed into the first annular groove 86 and an O-ring 96 having, for example, a rectangular cross sectional shape is installed into the second annular groove 87.

The third and fourth rolling bearings 72 and 73 have the same constituent features as in the previously described embodiment. The rolling bearing 72 is provided with an outer ring 72a, an inner ring 72b and a plurality of balls 72c. The rolling bearing 73 is provided with an outer ring 73a, an inner ring 73b, and a plurality of balls 73c. The fits between the inner rings 72b and 73b and the bearing seats 80 are tight fits, while the fits between the outer rings 72a and 73a and the bearing mounting surfaces 84 and 85 of the first cylindrical body 82 are loose fits with clearance.

The spacer 74 is arranged so as to abut against both the inner ring 72b of the third rolling bearing 72 and the inner ring 73b of the fourth rolling bearing 73. The pressing member 75 is screwed onto the second externally threaded section 65d so as to press against the inner ring 73b of the fourth rolling bearing 73 through the dust seal 97.

In the case of a rear hub 60 configured as described heretofore, when the pressing member 75 is pressed against the inner ring 73b of the fourth rolling bearing 73 during installation of the drive body 67 onto the hub shaft 65, the outer ring 73a of the fourth rolling bearing 73 moves smoothly in the axial direction along with the inner ring 73b because the outer ring 73a fitted loosely into the first cylindrical member 82 of the drive body 67.

Although in the previous embodiments ball bearings are used for the third and fourth bearings, the present invention is not limited to ball bearings. It is also acceptable to use roller bearings or any other type of bearing that is a rolling bearing.

Although in the previous embodiments the rear hub is mounted to the frame together with the rear derailleur, the present invention is not limited to the mounting arrangements presented in the previous embodiments. For example, it is also acceptable for the rear hub to be mounted using nuts on both ends of the rear hub.

Although in the previous embodiments the pressing member 15 or 75 is screwed onto the hub shaft, it is also acceptable for the pressing member to be press fitted. In such a case, it is good to press fit the bearing 13 or 73 together with the pressing member 15 or 75. It is also acceptable to use an O-ring or the like to prevent the pressing member 15 or 75 from coming out of position, similarly to the contact member 22. In such a case, the pressing member 15 or 75 should be installed after press fitting the bearing 13 or 73 with a separate member.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed. These terms of degree should be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle hub (1; 60) comprising:
a hub shaft (5; 65) configured to be mounted to a bicycle frame (103) and form a center axis of rotation of the bicycle hub;
a tubular hub body (6; 66) arranged on the hub shaft (5; 66) to rotate about the center axis of the hub shaft;
a first rolling bearing (10; 70) arranged between the hub body (6; 66) and the hub shaft (5; 65) at a first end of the hub body;
a second rolling bearing (11; 71) arranged between the hub body (6; 66) and the hub shaft (5; 65) at a second end of the hub body and spaced apart from the first rolling bearing in an axial direction of the hub shaft (5; 65);
a tubular drive body (7; 67) arranged on the hub shaft (5; 65) in a rotatable manner and configured such that at least one sprocket (110) can be mounted to an outside circumference thereof;
a one-way clutch (8; 68) configured and arranged to transfer rotation from the drive body (7; 67) to the hub body (6; 66) in only one direction;
a third rolling bearing (12; 72) having an outer ring (12a; 72a) fitted loosely inside the drive body (7; 67) to have a clearance with respect to an inside circumference of the drive body, and an inner ring (12b; 72b) abutting against the hub shaft (5; 65) and fitting tightly onto the hub shaft;
a fourth rolling bearing (13; 73) arranged to an outwardly of the third rolling bearing (12; 72) in the axial direction of the hub shaft (5; 65), the fourth rolling bearing having an outer ring (13a; 73a) fitting loosely inside the drive body (7; 67) to have a clearance with respect to the inside circumference of the drive body, and an inner ring fitting (13b; 73b) tightly onto the hub shaft (5; 65);
a tubular spacer (14; 74) arranged on the hub shaft (5; 65) in such a manner as to be pinched between the inner rings (12b, 13b; 72b, 73b) of the third and fourth rolling bearings (12, 72; 13, 73); and
a pressing member (15; 75) configured to be fastened onto the hub shaft (5; 65) to press against the inner ring (13b; 73b) of the fourth rolling bearing (13; 73) and position the drive body (7; 67) relative to the hub body (6; 66).

2. The bicycle hub as recited in claim 1, wherein
the drive body (7; 67) includes
an outer cylindrical body (82) configured to form the outside circumference of the drive body (67), and
an inner cylindrical body (83) disposed within the outer cylindrical body (82) in a non-rotatable manner with respect to the outer cylindrical body (82) and having the one-way clutch mounted thereto.

3. The bicycle hub as recited in claims 1 and 2, wherein
the inner rings (72b, 73b) of the third and fourth rolling bearings (72, 73) are fitting tightly onto a bearing seat (80) that is fitting tightly onto the hub shaft (65).

4. The bicycle hub as recited in claims 1 or 3, further comprising
a seal member (49) disposed between the outer ring (13a; 73a) of the fourth rolling bearing (13; 73) and the inner circumference of the drive body (7; 67).

5. The bicycle hub as recited in claim 4, wherein
the internal surface (43) of the drive body (7; 67) includes an annular groove (46) for installing the seal member (49).

6. The bicycle hub as recited in claims 1 or 3, wherein
the first and second rolling bearings (10, 11; 70, 71) are angular ball bearings and the third and fourth rolling bearings (12, 13; 72, 73) are circumferential ball bearings.

7. The bicycle hub as recited in claims 1, 2 or 6, wherein
the one-way clutch (8; 68) includes
at least one clutch pawl (50; 89) movably mounted to the drive body (7; 67) between an extended position and a retracted position,
a force applying member (52; 92) configured and arranged to apply a force against the at least one clutch pawl to urge the at least one clutch pawl toward the extended position, and
a plurality of ratchet teeth (51; 90) provided on the hub body (6; 66), configured to selectively mate with the at least one clutch pawl (50; 89) when the drive body (7; 67) rotates in one direction such that the rotation of the drive body is transferred from the at least one clutch pawl (50; 89) to the ratchet teeth (51; 90) on the drive body, and configured to retract the at least one clutch pawl to the retracted position when the drive body rotates in the other direction.

8. The bicycle hub as recited in claim 7, wherein
the ratchet teeth (51; 90) face inwardly in a radial direction from an internal surface of the hub body (6; 66) towards the center axis of the hub shaft (5; 65).
